# EUROPEAN PATENT APPLICATION

(11) **EP 4 343 253 A1**
(43) Date of publication of application: **27.03.2024**
(21) Application number: 22196552.8
(22) Date of filing: 20.09.2022
(51) Int. Cl.: F28D 9/00, F28F 3/02, F28F 3/06, B21D 53/04, B23K 1/00, B23P 15/26

(54) **METHOD FOR THE ASSEMBLY OF A PLATE AND FIN HEAT EXCHANGER AND A PLATE AND FIN HEAT EXCHANGER**

(71) Applicant: Alfa Laval Corporate AB, 221 00 Lund (SE)
(72) Inventor: HAGHIGHI, Kamran, SE-244 65 FURULUND (SE); NORÉN, Mattias, SE-238 31 OXIE (SE)
(74) Representative: Alfa Laval Attorneys

(57) **Abstract**

The present disclosure relates to a method for assembling a plate package of a plate and fin heat exchanger (1) comprising a plurality of flat plates (4, 4') and a plurality of fin plates (3), wherein each flat plate (4, 4') comprises a peripheral flank portion (4a, 4b; 4a', 4b') on two opposing longitudinal sides of the respective flat plate. Each flank portion is permanently joined to an adjacent flat plate (4') such that a longitudinally extending flow channel (12) is formed between the adjacent flat plates (4, 4'), and wherein each flat plate (4, 4') comprises a heat exchange portion (14), which has a transversal extension between the peripheral flank portions (4a, 4b; 4a', 4b'). The fin plates (3) comprise a plurality of longitudinally extending fins (32) arranged in the heat exchange portion (14), which fins (32) form in a transversal direction parallel guide channels (34) for a first and second heat exchange medium (18, 22), respectively. The fin plates (3) and the flat plates (4, 4') are permanently attached to each other. The method comprises providing a larger fin plate than the heat exchange portion in the transversal direction and placing it onto the flat plate of the package before permanently joining the plates together. In this way the size of the bypass voids may be minimized.

## Description

### Technical field

The present invention relates to a method for the assembly of a plate package of a plate and fin heat exchanger and a plate and fin heat exchanger as defined in the introductory parts of the independent claims attached herein.

### Background art

Plate heat exchangers, or PHEs, are heat exchangers which typically comprise a plurality of metallic heat exchange plates arranged in an aligned manner and such that flow channels are formed between the plates. The heat exchange plates are used to separate two fluids and transfer heat between the fluids. In the plate heat exchanger, fluids of different temperatures flow through the flow channels, which can comprise a fin plate providing a number of flow channels providing an increased heat exchange area. The fins may be provided by corrugating thin sheet metal plates. The heat exchanger plates may be arranged as a package between end plates and all the plates may be joined by brazing. In some variants pressure plates, which press the heat exchanger plates and the end plates towards each other, may be used. To be able to transfer heat between the fluids, flow channels for the respective fluids are needed, and this can be achieved in different manners depending on the heat exchanger type and the fluids in questions.

There are different types of plate heat exchangers (PHE) and the plate heat exchangers may be adapted for different types of thermal fluids. Well-known PHEs include for example brazed heat exchangers, in which flows of the thermal fluids are normally arranged in a counter current manner in separate channels. No gaskets or similar need to be used to separate the fluids. In the heat exchangers fluids of initially different temperatures flow and transfer heat from one fluid to the other.

Plate and fin type of heat exchangers are well known in the art. Example of a brazed plate and fin heat exchanger is disclosed by US4673551.

Despite existing brazed plate and fin heat exchangers solutions, there is still a need for improvements especially in the assembly of such plate heat exchangers. Especially, there is a need to simplify the assembly. Further, there is a need to improve the thermal performance of plate heat exchangers.

### Summary

In fin and plate heat exchangers, fin plates and flat plates are assembled alternatingly on top of each other to form a plate package with flow channels. After a desired package height is reached, the plates are permanently joined together by for example brazing, which requires treatment with heat. In connection with the present disclosure, it was noted that after brazing, bypass voids were formed on the respective longitudinal side ends of fin plates. The voids worsen the thermal performance of the heat exchanger and they are therefore undesirable. It is therefore an objective of the present invention to minimize the size of the voids.

It is thus an objective of the present invention to mitigate, alleviate or eliminate one or more of the above-identified disadvantages in the prior art. It is an objective to provide solutions for heat exchangers which provide for improved thermal performance. It is also an objective to provide a robust heat exchanger.

It is a further objective to provide a simple method for assembly of a plate package.

The above-mentioned objectives are attained by the present invention as defined in the appended claims.

According to a first aspect, there is provided a method for assembling a plate package of a plate and fin heat exchanger, the plate package comprising a plurality of flat plates and a plurality of fin plates. Each flat plate comprises a peripheral flank portion on two opposing longitudinal sides of the respective flat plate. Each flank portion is permanently joined to an adjacent flat plate such that a longitudinally extending flow channel is formed between the adjacent flat plates, and wherein each flat plate comprises a heat exchange portion, which has a transversal extension between the peripheral flank portions. The fin plates comprise a plurality of longitudinally extending fins arranged in the heat exchange portion, which fins form in a transversal direction parallel guide channels for a first and second heat exchange medium, respectively. The method comprises the following steps:
i. providing a flat plate comprising peripheral flank portions on opposing longitudinal sides of the flat plate, which flank portions delimit the heat exchange portion of the flat plate;
ii. providing a fin plate with longitudinally extending fins, the fin plate having a transversal extension which is larger than a transversal extension of the heat exchange portion of the flat plate;
iii. pressing opposing sides of the fin plate towards each other in the transversal direction so that the fin plate fits between the flank portions and on the heat exchange portion of the flat plate;
iv. placing a next flat plate of the package on top of the preceding fin plate in the package such that at least a portion of the next flat plate is in contact with fins of the fin plate fitted in the heat exchange portion of the preceding flat plate and so that the flank portions of the flat plates are connected to the flank portions of the next flat plate; and
v. repeating the steps i)-iv) until the number of the plates in the package reaches a target number, and
vi. permanently joining the flat plates comprising the flank portions and the fin plates together.

By the method a plate package with improved thermal performance is provided. This is enabled since the transversal extension of the fin plate is oversized compared to the surface where it is to be positioned. Therefore, it is possible to minimize the size of bypass voids formed after the permanent joining of the plates in the package.

In the step iv) the flank portions of the flat plates may be connected to the flank portions of the next plate such that they overlap in height direction of the package. In this way compact structure can be provided.

The heat exchange portion of the flat plate may transition to the flank portions via rounded corner portions on the respective side of the flat plate. In the step iii) the pressing of the flank portions may comprise minimizing a radius of the rounded corner portion. In this way, the fins may be brought into closer proximity of the flanks before the permanent joining. When the package is heated during the permanent joining, the fins remain closer to the flanks, and thus the size of the bypass voids can be decreased. Therefore, the thermal performance can be further improved.

The step iii) may thus further comprise minimizing the radius such that the radius is smaller than the height of the flow channel, preferably less than 0.5h, and/or so that the radius is smaller than twice the thickness of the flat plate, preferably less than 1.1 times the thickness of the flat plate and/or so that the distance between an inner surface of the flank portion and an outermost part of a fin closest to the flank portion is at a middle point of height of the flow channel smaller than the height of the flow channel, preferably less than 0.5h.

In the step iii), pressing may comprise adjusting a first distance, which is measured at a middle point of height of the flow channel, between an inner surface of the flank portion and an outermost part of a fin closest to the flank portion such that the first distance is smaller than a second distance between two neighboring fins, or such that the first distance is smaller than a height of the flow channel. In this way, the size of the bypass void formed during the permanent joining can be minimized.

The first distance may be at the middle point of height of the flow channel less than 0.7h, preferably less than 0.5h. The smaller the distance is, the smaller is the bypass void.

The pressing may alternatively or additionally comprise adjusting a first hydraulic diameter between the inner surface of the flank portion and an outermost part of a fin closest to the flank portion, such that the first hydraulic diameter is equal to or smaller than a second hydraulic diameter between two neighboring fins, measured at a point where the hydraulic diameter is smallest along the longitudinal extension of the fins.

The step ii) may comprise providing a fin plate in which a length of a fin wall of the outermost fin is less than the height of the flow channel and the fin is open towards the heat exchange portion of the flat plate. In this way, the outermost fin can be brought into close proximity of the inner surface of the flank and thus, the bypass void may be further minimized. The length of the fin wall may be less than the height h of the flow channel, preferably less than 0.5h. Alternatively, the length of the fin wall is less than 0.25h.

The permanently joining in the step vi) may be performed by means of brazing or joining by means of the material of the heat transfer plates by application of a melting depressant composition applied to the heat transfer plates prior to being heated.

The present invention further relates to a plate heat exchanger comprising a plate package manufactured by the method as described above.

According to a further aspect, there is provided a plate and fin heat exchanger comprising a plate package comprising a plurality of flat plates and a plurality of fin plates, wherein each flat plate comprises peripheral flank portions on two opposing longitudinal or lateral sides of the respective flat plate. Each flank portion is permanently joined to an adjacent flat plate, suitably to the flank portions thereof. The flank portion is joined such that a longitudinally extending flow channel is formed between the adjacent flat plates. Each flat plate comprises a heat exchange portion, which has a transversal extension between the peripheral flank portions. The fin plates comprise a plurality of longitudinally extending fins arranged in the heat exchange portion of the flow channels between and in contact with the adjacent flat plates. The fins form in a transversal direction parallel guide channels for a first and second heat exchange medium, respectively. The heat exchange portion of the flat plate transitions to the flank portions via rounded corner portions on the respective side of the flat plate, and wherein the flank portions are pressed such that a radius of the rounded corner portion is minimized and is smaller than the height of the flow channel, preferably less than 0.5h. Alternatively, or additionally the radius is adjusted to be smaller than twice the thickness of the flat plate, preferably less than 1.1 times the thickness of the flat plate (4). Alternatively, or additionally a first distance between the inner surface of the flank and the outermost fin, which is measured at a middle point of height of the flow channel, is smaller than a second distance between two neighboring fins, or such that the first distance is smaller than a height of the flow channel. In this way the bypass void, which is formed during the permanent joining in the area between an inner surface of the flank and an outermost fin can be minimized. The bypass void is thus configured to be minimized by adjusting the distance between the inner surface of the flank and the outermost fin and/or a bending radius of the flank.

According to a variant, a first hydraulic diameter between an inner surface of the flank portion and an outermost part of the fin closest to the flank portion may be adjusted to be equal or smaller than a second hydraulic diameter between two neighboring fins, measured at a point where the hydraulic diameter is smallest along the longitudinal extension of the fins.

According to a further variant, a length of a fin wall of the outermost fin is less than the height of the flow channel and the fin is open towards the heat exchange portion of the flat plate.

### Brief descriptions of the drawings

The above objectives, as well as additional objectives, features and advantages of the present invention, will be more fully appreciated by reference to the following illustrative and non-limiting detailed description of example embodiments of the present invention, when taken in conjunction with the accompanying drawings.
Fig. 1 is a schematical drawing showing a plate heat-exchanger in a perspective view.
Fig. 2 shows a schematic cross-sectional illustration along the line X-X shown in Fig. 1 of a plate and fin heat exchanger assembled according to a prior art method.
Fig. 3a-3c illustrate different shapes of fins.
Fig. 4 illustrates the steps i)-iii) of a method according to the present invention.
Fig. 5 illustrates a prior art plate and fin heat exchanger in which fins are constrained by radius of the flat plate bending curve whereby a large bypass void is obtained between a flank of the flat plate and the outermost fin of the fin plate.
Fig. 6 illustrates a plate and fin heat exchanger obtained by the present method in which the size of the bypass voids is minimized by minimizing the bending radius of the flank of the flat plate.
Fig. 7a-7d show examples of fin cuts to obtain minimum size for bypass void.
Fig. 8 shows a schematic cross-sectional illustration along the line X-X shown in Fig. 1 of a plate package with minimized bypass voids obtained by the method according to the present invention.

### Detailed description

Today's process technologies often involve heat exchangers for improving the energy efficiency of processes. It has been found that the objectives above are achieved by the heat exchanger comprising the plate package assembled according to the method of the present invention. It has been noted that improved thermal performance can be obtained and the solution of the present invention will now be described with reference to the accompanying drawings showing examples of the invention. The invention may, however, be embodied in other forms and should not be construed as limited to the herein disclosed example embodiments. The disclosed embodiments are provided to fully convey the scope of the invention to the skilled person.

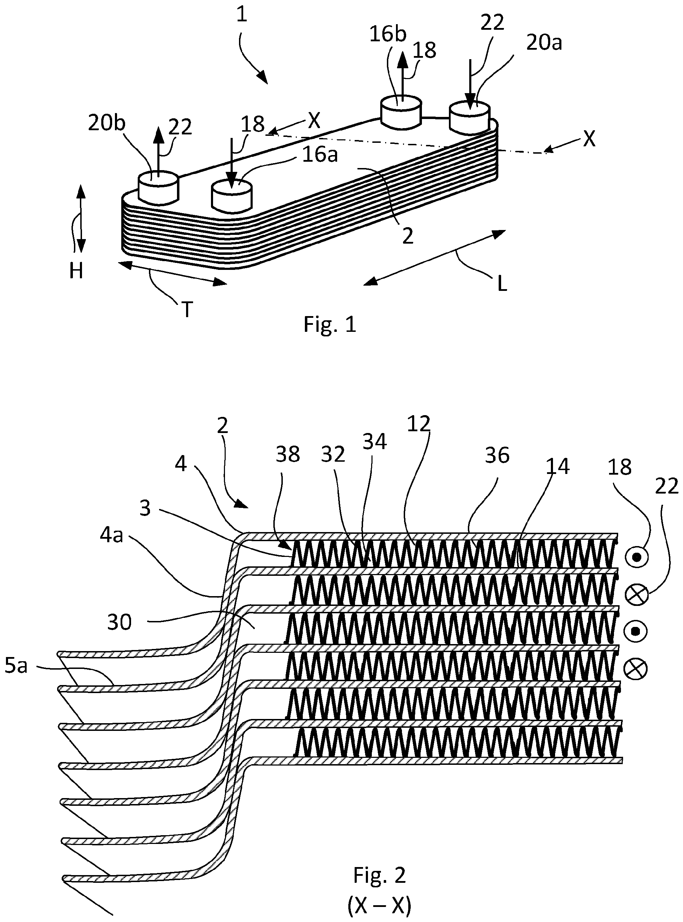

According to a first aspect of the present invention, a method for assembling a plate package of a plate and fin heat exchanger is provided. The plate package is shown in Fig. 1 and 2 and reference is equally made to both figures. The plate package 2 of a plate and fin heat exchanger 1 thus comprises a plurality of flat plates 4 and a plurality of fin plates 3.

Generally, in this application, by flat plate is meant a plate without any pressed channel or fin design. By a fin plate is meant a plate comprising a pressed channel or fin design. The plates are usually metallic plates, which comprise or consist of a metal or a metal alloy. Generally, the material for the fin plates and the flat plates may be any suitable and commonly used, such as stainless steel, aluminium, copper, nickel, tantalum, titanium or alloys thereof, but are not limited thereto. The materials may be the same or different for the fin plates and the flat plates. Generally, both the fin plates and the flat plates may have a thickness of from 0.08 to 5.0 mm, or from 0.3 to 3.0 mm. The thickness of the fin plates may be the same or may be different in the package. The thickness of the flat plates may be from 0.25 to 5 mm and in the package the thickness may be the same for all flat plates, except for the end plates, which may be thicker. The fin plates may be thinner, and may have a thickness from 0.08 to 5 mm, or from 0.1 to 1 mm, and they may have the same thickness or they may initially have the same thickness in the whole package. However, during the pressing operation, the thickness of the fin plates may be influenced, whereby the final thickness of the fin plates may be smaller than the thickness of the flat plate. It is thus possible that the metal plate thickness for the fin plates is thicker or thinner than the metal plate thickness for the flat plates, but is preferably thinner than the thickness of the flat plates.

By a longitudinal direction L of the heat exchanger is meant a direction extending between a respective inlet port 16a and outlet port 20a, or an inlet port 16b and outlet port 20b, and as illustrated in Fig. 1. A transversal direction T is a direction perpendicular to the longitudinal direction L in the same plane. A height direction H is a direction extending perpendicularly to the plane of the longitudinal-transversal directions.

Each flat plate 4 comprises a peripheral flank portion 4a, 4b on two opposing longitudinal sides L of the respective flat plate and as shown in Fig. 2, which illustrates an assembled plate package 2 after permanent joining of the plates. In Fig. 2 it is shown that the flank portion 4a of the flat plates 4 transitions to a brim portion 5a. In a symmetrical way the flank portion 4b in the opposing longitudinal side can transition to a brim portion 5b, which is not shown in the picture of Fig. 2. The brim portion may be omitted. In the package 2, each flank portion 4a and 4b is permanently joined to a flank portion of an adjacent flat plate 4 such that a longitudinally extending flow channel 12 is formed between the adjacent flat plates 4. In this flow channel or channel the cold and warm fluids are arranged to flow in separated channels 34 formed by fins 32 of the fin plates. Each flat plate 4 comprises a heat exchange portion 14, which has a transversal extension between the peripheral flank portions 4a, 4b, and the fins of the fin plate are arranged connected to the heat exchange portion 14. The fin plates 3 thus comprise a plurality of longitudinally extending fins 32 arranged in the heat exchange portion 14 of the flow channels 12 between the adjacent flat plates 4. The fins 32 form in a transversal direction parallel guide channels 34 for a first and second heat exchange medium 18, 22 respectively.

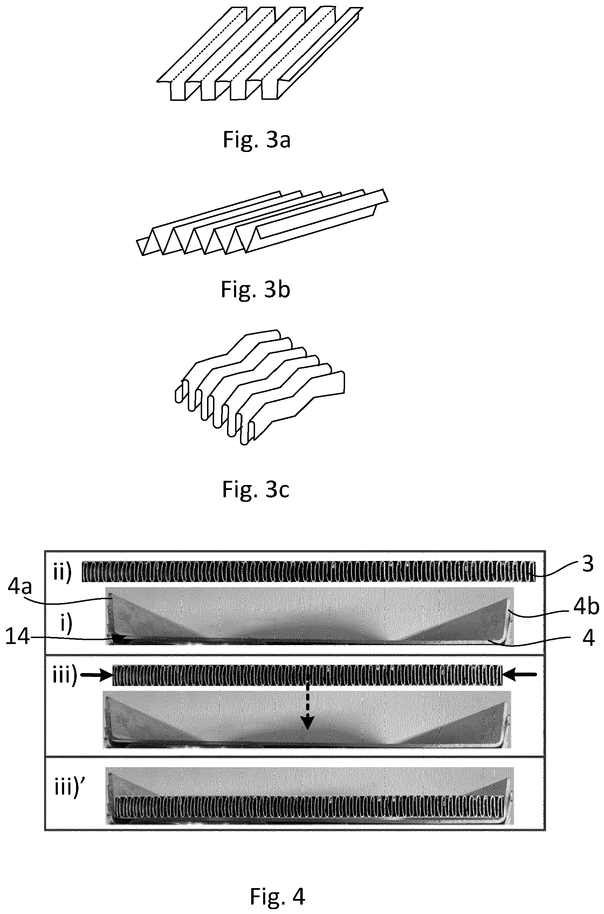

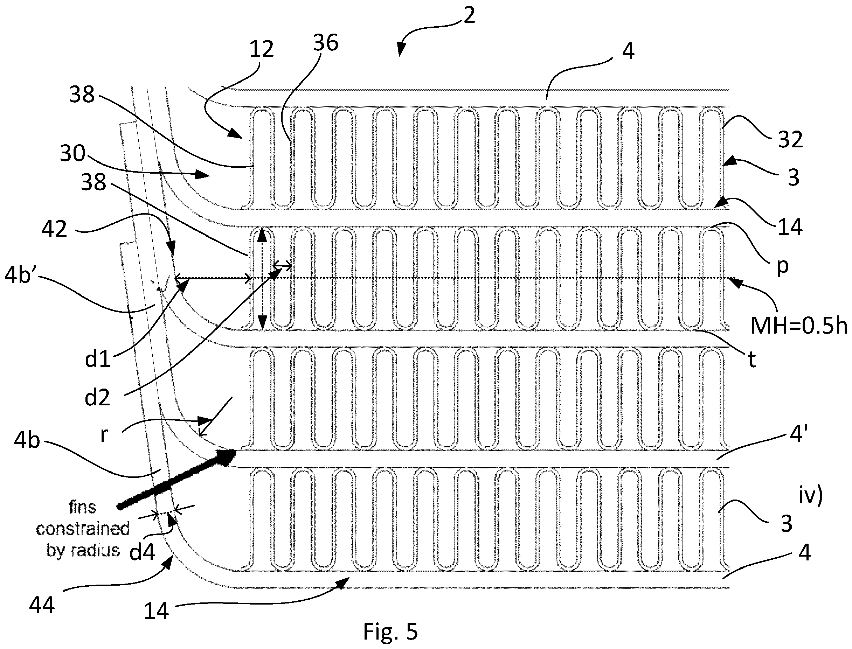

The longitudinally extending fins 32 may have different cross-sectional shapes, which may also vary along the longitudinal and/or transversal extension. Examples of different fin shapes are shown in Fig. 3 a)-c). Generally, the fins may have a wave shape and be parallel in a transversal direction, each wave having wave peaks (p) and wave troughs (t) (see Fig. 5). The fins may be substantially straight along the longitudinal extension L. However, the fins may have another shape along the longitudinal extension. For example, the shape may be wavy along the longitudinal extension as illustrated in Fig. 3c. The fins may in the cross-section have a wave-shape, e.g. substantially a sinus-wave shape. Alternatively, the fins may have a rectangular or triangular cross-section as shown in Fig 3a and 3b, respectively. A further variant could be so called offset strip-shape in which a wavy shape is resembled with rectangular blocks shifted in a wavy manner in the transversal direction. Further, the fins may have different surface treatment along the fin, and they may be for example perforated or louvered.

Fig. 2 shows bypasses 30 (only one depicted with the reference sign) in the flow channels 12 of the heat exchanger plate package 2 after the permanent joining. The bypass 30 is a void between an outermost part 38 of the fin wall 36 and the flank 4a, and correspondingly on the opposite lateral side of the flat plate a flank 4b and a corresponding outermost part 38 of the fin wall 36 on this side of the fin plate 3. In Fig. 2 the bypass voids 30 are large. In the bypass void 30, no heat exchange between fluids having different temperatures occurs. Thus, the bypasses decrease the thermal performance of the heat exchanger. The objective of the present invention is to minimize the size of the bypasses in the flow channels, and thus improve the thermal performance of a heat exchanger.

A heat exchanger with an improved thermal performance can be obtained by the method of the present invention, and reference is now made to Fig. 4, which illustrates the steps i) to iii) of the invention. In the first step i) a flat plate 4 comprising peripheral flank portions 4a and 4b on opposing longitudinal sides, i.e. lateral sides, of the flat plate is provided. The flank portions 4a, 4b, delimit the heat exchange portion 14 of the flat plate as described in connection with Fig. 2. In the step ii) a fin plate 3 with longitudinally extending fins 32 is provided. The fin plate 3 has a transversal extension which is larger than a transversal extension of the heat exchange portion 14 of the flat plate. In the next step iii) the opposing sides of the fin plate 3 are pressed towards each other in the transversal direction so that the fin plate 3 fits between the flank portions 4a and 4b and on the heat exchange portion 14 of the flat plate. When the fin plate 3 is placed on the flat plate 4 and the fin plate 3 is released from pressing the lateral sides towards each other, it may expand so that the lateral sides rest towards the flank portions 4a and 4b, as illustrated in Fig. 4 with reference sign iii)'.

To provide a plate package 2, a desired number of flat plates 4 and fin plates 3 are packed on top of each other. Reference is made to Fig. 5 to illustrate how the package 2 can be provided. Thus, after the step iii), the following step is a step iv) in which a next flat plate 4' is placed on top of the preceding fin plate 3 such that at least a portion of the next flat plate 4' is in contact with the fins 32 of the fin plate 3 fitted in the heat exchange portion 14 of the preceding flat plate 4. The flat plates 4, 4' thus form the guide channels 34 together with the fins 32 for the respective first and second heat exchange mediums 18, 22. The flank portions 4b, 4b', and in a similar manner 4a and 4a'(not shown in the drawing), of the flat plates 4, 4' overlap in height direction h of the package 2. As can be seen in Fig. 5, the heat exchange portion 14 of the flat plate 4 transitions to the flank portion 4b (and similarly to 4a) via rounded corner portions 44 on the respective side of the flat plate 4.

In the step v) of the method the comprises repeating the steps i-iv until the number of the plates in the package reaches a target number.

The method further comprises a step vi) comprising permanently joining the flank portions 4a, 4a' and 4b, 4b' on the respective longitudinal sides of the adjacent flat plates 4, 4' to provide a plate package. The permanent joining may be performed by for example brazing or by joining by means of the material of the heat transfer plates by application of a melting depressant composition applied to the heat transfer plates prior to being heated, e.g., as discussed in WO 2013144211. Thus, the permanent joints may be formed by a joining method in which the plates are subjected to a heat lower than the melting point of the heat transfer plates. Such joining methods may be one of brazing with an added brazing material in the form of a foil, a paste, or a powder comprising e.g., copper or nickel, or joining by means of the material of the heat transfer plates by application of a melting depressant composition applied to the heat transfer plates prior to being heated.

By manufacturing the plate package as described above, it is possible to minimize the void for the bypasses. This in turn improves the thermal performance of the heat-exchanger.

The flank portions 4a, 4b on the respective longitudinal sides of the flat plate 4 can be provided upstream or in conjunction with the the step i) in the method. The pressing may be performed by means of a pressing tool, which can be any suitable metal working tool known in the art.

Reference is made to Fig. 5 showing an illustration of a plate package, which is not manufactured by the method according to the invention. The radius r constrains the fins 32 of being located closer to the inner surfaces 42 flanks, 4a, 4b. Thus, a large bypass void 30 is present. Fig. 5 further shows that the void 30, which is formed between an inner surface 42 of the flank portion 4b and an outermost part 38 of a fin 32, has a first distance d1 between the inner surface 42 of the flank 4b and the outermost fin 38 at a middle point of height MH of the total height of the flow channel 12. Fig. 5 also shows a distance d2 which refers to a distance between two adjacent fins 32 along the transversal extension T of the fin plate. The distance d1 is larger than the distance d2. In Fig. 5, the radius is rather large, and therefore, the distance d1 between the outermost fin 38 and in inner surface of the flank 42, measured at the middle point of height (MH), is rather large.

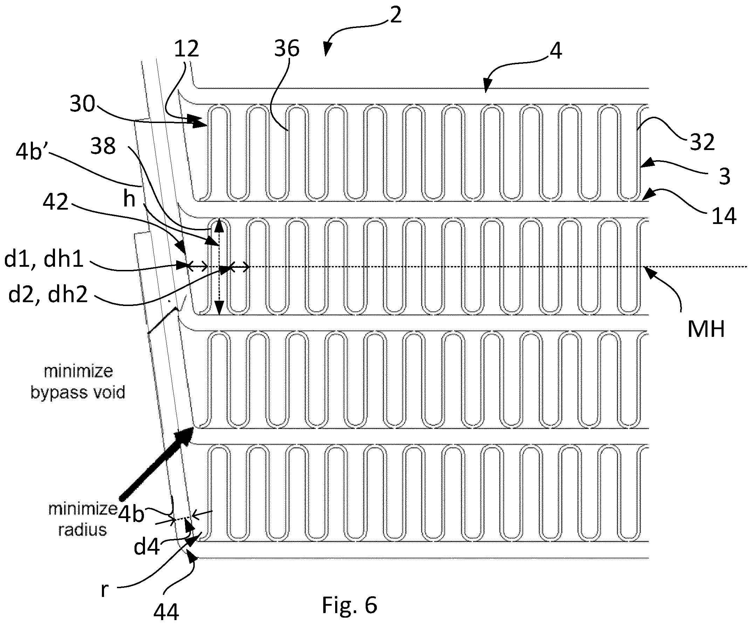

In Fig. 6 a variant of the plate package in which the radius (r) of the rounded corner portion has been minimized, is shown. Fig. 6 shows a plate package manufactured by the method according to the present invention, the corresponding distance d1 between the inner surface 42 of the flank 4b and the outer most fin 38 at a middle point of height MH of the total height of the flow channel 12 is smaller than the distance d2 between two fins 32. The first distance (d1) between the inner surface 42 of the flank portion 4b and an outermost fin 38, which is closest to the flank portion 4b, is adjusted such that the first distance (d1) will be equal to or smaller than a second distance (d2) between two neighboring fins 32. Alternatively, the first distance d1 can be adjusted to be smaller than the height (h) of the flow channel 12. In Fig. 5, the distance d1 is larger than in Fig. 6, in which the distance d1 at a middle point of height MH of the flow channel is minimized and is less than 0.5h.

Alternatively, or additionally, a hydraulic diameter dh can be used as a reference for the adjustment of the void size. In that case, the hydraulic diameter is adjusted such that a first hydraulic diameter (dh1) between an inner surface of the flank portion and an outermost part of a fin closest to the flank portion, is equal or smaller than twice a second hydraulic diameter (dh2) between two neighboring fins.

By hydraulic diameter is meant a quota
dh=4A/P, in which
A= a cross-sectional area (A) of the flow;
P= wetted perimeter of the cross section.

That is, the quota is between a cross-sectional area (A) of the flow and P wetted perimeter of the cross section (P). This quota applies when the flow channels are non-circular, as is the case in the present application.

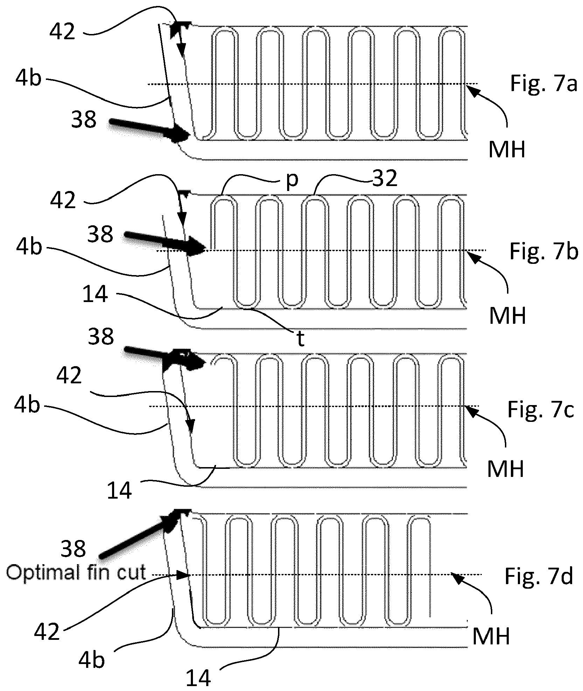

Further reference is made to Fig. 7a-7d, in which different types of fin cuts are illustrated. In Fig. 7a, a conventionally used fin cut is shown, and which is shown also in connection with Fig. 5 and 6. A disadvantage with this cut is that the radius of the flank 4b bend will constrain the position of the outermost fin 38 in respect of the inner surface 42 of the flank. According to the present application, the outermost fin 38 can be cut in conjunction with the step (ii) which comprises providing a fin plate 3. The fin wall 36 of the outermost fin 38 is then cut to a height which is less than the height of the flow channel 12. In Fig. 7b, the height is about 0.5h and the fin opens towards the heat exchange portion 14 of the flat plate 4. By being open is meant that the fin has its peak p in contact with the next plate 4', the outermost part 38 does not have a trough in contact with the previous flat plate 4. In Fig. 7c and 7d, the height is even shorter, and can be less than 0.25h or less than 0,1 h, and the fin opens towards the heat exchange portion 14 of the flat plate 4. In Fig. 7d, in which the height is less than 0.25h and close to the peak of the fin, an optimal fin cut is provided when trying to minimize the void of the bypass.

Reference is now again made to Fig. 5 and 6, in both of which the plate package is schematically illustrated before permanent joining of the package. The adjustment of the pressing of the flank portions 4a, 4b of the flat plate 4 may be done such that rounded corner portions 44 with a radius (r) as a transition between the heat exchange portion 14 and respective the flank portion 4a, 4b is provided. The adjustment may thus be done by adjusting the radius r. The bending radius r is in Fig. 5 larger than in Fig. 6. Fig. 6 shows a variant of a plate package 2 obtained by the present method. The adjustment of the radius (r) may be done in the step i) as described above in the general description of the invention. For example, the step i) may further comprise adjusting the radius (r) such that the distance (d1) between an inner surface of the flank portion 4b and an outermost fin 38 closest to the flank portion 4b, is at a middle point of height (MH) smaller than the height (h) of the flow channel 12, preferably less than 0.5h. Alternatively, the minimizing is performed such that the radius (r) is smaller than twice the thickness (d4) of the flat plate 4, preferably less than 1.1 times the thickness (d4) of the flat plate 4. In some cases, the radius may be about 1/5 of the thickness of the flat plate.

The method further comprises permanently joining the flank portions 4a, 4b and 4a', 4b' of the adjacent flat plates 4, 4' to provide a plate package 2. The permanent joining may be performed by means of brazing or joining by means of the material of the heat transfer plates by application of a melting depressant composition applied to the heat transfer plates prior to being heated. The present invention also relates to a plate heat exchanger 1 comprising the plate package 2 manufactured by the method as described above.

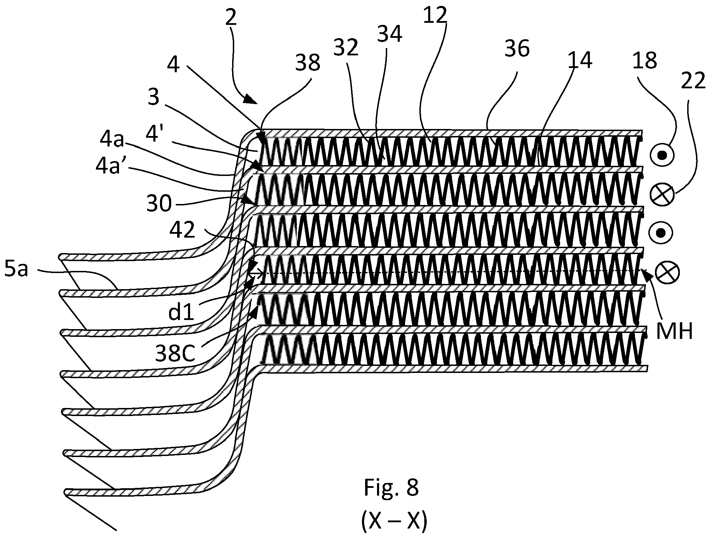

Reference is made to the Fig. 8, in which a schematic illustration is shown of a plate package 2 obtained by the present method. The illustration is a cut view in plane X-X as shown in Fig. 1 and in a similar manner as in Fig. 2. The package 2 comprises a plurality of flat plates 4, 4' and a plurality of fin plates 3, wherein each flat plate 4, 4' comprises peripheral flank portions 4a, 4a' (4b and 4' not shown) on two opposing longitudinal sides of the respective flat plate. Each flank portion 4a, 4a' is permanently joined to a flank portion of an adjacent flat plate 4 such that a longitudinally extending flow channel 12 is formed between the adjacent flat plates 4, 4'. Each flat plate 4, 4' comprises a heat exchange portion 14, which has a transversal extension between the peripheral flank portions 4a, 4b; 4a', 4b'. The fin plates 3 comprise a plurality of longitudinally extending fins 32 arranged in the heat exchange portion 14 of the flow channels 12 between the adjacent flat plates 4. The fins 32 form in a transversal direction parallel guide channels 34 for a first and second heat exchange medium 18, 22, respectively. A first distance (d1) between an inner surface 42 of the flank portion and an outermost fin 38 at a level of middle height MH of the flow channel 12, which is closest to the flank portion, is minimized, as basically described above.

As described in connection with Fig. 7a-7d, a length of a fin wall 36 of the outermost fin 38 may be less than the height h of the flow channel 12. The fin 32 may be open towards the heat exchange portion 14 of the flat plate 4, as shown in Fig. by reference sign 38C. Thus, as shown by Fig. 8 and when compared to Fig. 2, the bypass voids can be reduced in size, when assembling and manufacturing the plate package according to the present invention.

The person skilled in the art realizes that the present invention is not limited to the examples described above. The person skilled in the art further realizes that modifications, combinations and variations are possible within the scope of the appended claims. Additionally, variations to the disclosed embodiments can be understood and effected by the skilled person in practicing the claimed invention, from a study of the drawings, the disclosure, and the appended claims.

## Claims

1. A method for assembling a plate package of a plate and fin heat exchanger (1), the plate package comprising:
a plurality of flat plates (4, 4') and a plurality of fin plates (3), wherein each flat plate (4, 4') comprises a peripheral flank portion (4a, 4b; 4a', 4b') on two opposing longitudinal sides of the respective flat plate;
wherein each flank portion is permanently joined to an adjacent flat plate (4') such that a longitudinally extending flow channel (12) is formed between the adjacent flat plates (4, 4'), and wherein each flat plate (4, 4') comprises a heat exchange portion (14), which has a transversal extension between the peripheral flank portions (4a, 4b; 4a', 4b');
wherein the fin plates (3) comprise a plurality of longitudinally extending fins (32) arranged in the heat exchange portion (14), which fins (32) form in a transversal direction parallel guide channels (34) for a first and second heat exchange medium (18, 22), respectively; and
wherein the fin plates (3) and the flat plates (4, 4') are permanently attached to each other; and
wherein the method comprises:
i. providing a flat plate (4) comprising peripheral flank portions (4a, 4b) on opposing longitudinal sides of the flat plate, which flank portions delimit the heat exchange portion (14) of the flat plate;
ii. providing a fin plate (3) with longitudinally extending fins (32), the fin plate having a transversal extension which is larger than a transversal extension of the heat exchange portion (14) of the flat plate (4);
iii. pressing opposing sides of the fin plate (3) towards each other in the transversal direction so that the fin plate fits between the flank portions (4a, 4b) and on the heat exchange portion (14) of the flat plate;
iv. placing a next flat plate (4') of the package on top of the preceding fin plate (3) in the package such that at least a portion of the next flat plate (4') is in contact with fins (32) of the fin plate (3) fitted in the heat exchange portion (14) of the preceding flat plate (4) and so that the flank portions (4a, 4b) of the preceding flat plates (4) are connected to the flank portions (4a', 4b') of the next flat plate (4');
v. repeating the steps i)-iv) until the number of the plates in the package reaches a target number.
vi. permanently joining the flat plates comprising the flank portions and the fin plates together.

2. The method of claim 1, wherein in the step iv) the flank portions (4a, 4b) of the flat plates (4) are connected to the flank portions (4a', 4b') of the next flat plate (4') such that they overlap in height direction of the package.

3. The method of any one of the preceding claims, wherein the heat exchange portion (14) of the flat plate (4) transitions to the flank portions (4a, 4b) via rounded corner portions (44) on the respective side of the flat plate (4), and wherein in the step iii) the pressing of the flank portions (4a, 4b) comprises minimizing a radius (r) of the rounded corner portion (44).

4. The method of claim 3, wherein the step iii) further comprises minimizing the radius (r) such that the radius (r) is smaller than the height (h) of the flow channel, preferably less than 0.5h, and/or so that the radius is smaller than twice the thickness of the flat plate (4), preferably less than 1.1 times the thickness (d4) of the flat plate (4), and/or so that the distance (d1) between an inner surface (42) of the flank portion (4a, 4b) and an outermost part (38) of a fin (32) closest to the flank portion (4a, 4b) is at a middle point of height (MH) of the flow channel (12) smaller than the height (h) of the flow channel, preferably less than 0.5h.

5. The method according to any one of the preceding claims, wherein in the step iii), pressing comprises adjusting a first distance (d1), which is measured at a middle point of height (MH) of the flow channel (12) between an inner surface (42) of the flank portion (4a, 4b) and an outermost part (38) of a fin (32) closest to the flank portion (4a, 4b) such that the first distance (d1) is smaller than a second distance (d2) between two neighboring fins (32), or such that the first distance (d1) is smaller than a height (h) of the flow channel (12).

6. The method according to claim 5, wherein the first distance (d1) is less than 0.7h, preferably less than 0.5h.

7. The method according to any one of the preceding claims, wherein in the step iii) the pressing comprises adjusting a first hydraulic diameter (dh1) between the inner surface (42) of the flank portion (4a, 4b) and the outermost part (38) of the fin (32) closest to the flank portion (4a, 4b), such that the first hydraulic diameter (dh1) equal to or smaller than twice a second hydraulic diameter (dh2) between two neighboring fins measured at a point where the hydraulic diameter is smallest along the longitudinal extension of the fins (32).

8. The method according to any one of the preceding claims, wherein the step (ii) comprises providing a fin plate (3) in which a length of a fin wall (36) of the outermost fin (38) is less than the height of the flow channel (12) and the fin is open towards the heat exchange portion (14) of the flat plate (4).

9. The method according to claim 8, wherein the length of the fin wall (36) is less than less than 0.5h, or 0.25h.

10. The method according to any one of the preceding claims, wherein the permanent joining in the step the flank portions (4a, 4b; 4a', 4b') of the adjacent flat plates (4, 4') to provide a plate package (2).

11. The method of claim 10, wherein the permanently joining in the step vi) is performed by means of brazing or joining by means of the material of the heat transfer plates by application of a melting depressant composition applied to the heat transfer plates prior to being heated bonding.

12. Plate heat exchanger comprising a plate package manufactured by the method according to any one of claims 1-11.

13. A plate and fin heat exchanger (1) comprising a plate package (2) comprising a plurality of flat plates (4, 4') and a plurality of fin plates (3), wherein each flat plate (4, 4') comprises a peripheral flank portion (4a, 4b; 4a', 4b') on two opposing longitudinal sides of the respective flat plate, and wherein each flank portion is permanently joined to an adjacent flat plate (4') such that a longitudinally extending flow channel (12) is formed between the adjacent flat plates (4, 4'), and wherein each flat plate (4, 4') comprises a heat exchange portion (14), which has a transversal extension between the peripheral flank portions (4a, 4b; 4a', 4b'), and wherein the fin plates (3) comprise a plurality of longitudinally extending fins (32) arranged in the heat exchange portion (14) of the flow channels (12) between and in contact with the adjacent flat plates (4), which fins (32) form in a transversal direction parallel guide channels (34) for a first and second heat exchange medium (18, 22), respectively, and wherein the heat exchange portion (14) of the flat plate (4) transitions to the flank portions (4a, 4b) via rounded corner portions (44) on the respective side of the flat plate (4), and wherein the flank portions (4a, 4b) are pressed such that a radius (r) of the rounded corner portion (44) is minimized and is smaller than the height (h) of the flow channel, preferably less than 0.5h, and/or such that and/or so that the radius (r) is smaller than twice the thickness (d4) of the flat plate (4), preferably less than 1.1 times the thickness (d4) of the flat plate (4), and/or such that a first distance (d1) between the inner surface (42) of the flank and the outermost fin (38), which is measured at a middle point of height (MH) of the flow channel (12), is smaller than a second distance (d2) between two neighboring fins (32), and/or such that the first distance (d1) is smaller than a height (h) of the flow channel (12).

14. The heat exchanger of claim 13, wherein a first hydraulic diameter (dh1) between an inner surface (42) of the flank portion (4a, 4b) and an outermost part (38) of the fin closest to the flank portion is equal or smaller than twice a second hydraulic diameter (dh2) between two neighboring fins measured at a point where the hydraulic diameter is smallest along the longitudinal extension of the fins (32).

15. The heat exchanger of claim 13 or 14, wherein a length of a fin wall (36) of the outermost fin (38) is less than the height of the flow channel (12) and the fin (32) is open towards the heat exchange portion (14) of the flat plate (4).
